# EUROPEAN PATENT SPECIFICATION

(11) **EP 2 981 385 B1**
(45) Date of publication and mention of the grant of the patent: **02.08.2017**
(21) Application number: 14719116.7
(22) Date of filing: 01.04.2014
(51) Int. Cl.: B23B 51/00, B23B 51/02

(54) **TWIST DRILL BIT FOR DRILLING COMPOSITE MATERIALS**
SPIRALBOHRMEISSEL ZUM BOHREN VON VERBUNDWERKSTOFFEN
FORET HÉLICOÏDAL POUR LE PERÇAGE DE MATÉRIAUX COMPOSITES

(30) Priority: 05.04.2013 PL 40343613
(43) Date of publication of application: 10.02.2016
(73) Proprietor: Politechnika Rzeszowska im. Ignacego Lukasiewicza, 35-959 Rzeszów (PL)
(72) Inventor: TYCZYNSKI, Piotr, 35-113 Rzeszów (PL); SLIWA, Romana, 37-100 Lancut Poland (PL)
(86) International application number: PCT/PL2014/000034
(87) International publication number: WO 2014/163515

(56) References cited:
- WO-A1-2013/042914
- GB-A- 2 074 060
- US-A- 4 480 952
- US-A1- 2003 202 853
- US-A1- 2012 321 403
- US-B1- 6 964 546
- KO ET AL: "Burr minimizing scheme in drilling", JOURNAL OF MATERIALS PROCESSING TECHNOLOGY, ELSEVIER, NL, vol. 140, no. 1-3, 22 September 2003 (2003-09-22), pages 237-242, XP005349057, ISSN: 0924-0136, DOI: 10.1016/S0924-0136(03)00719-2
- HOCHENG ET AL: "Comprehensive analysis of delamination in drilling of composite materials with various drill bits", JOURNAL OF MATERIALS PROCESSING TECHNOLOGY, ELSEVIER, NL, vol. 140, no. 1-3, 22 September 2003 (2003-09-22), pages 335-339, XP005349075, ISSN: 0924-0136, DOI: 10.1016/S0924-0136(03)00749-0

## Description

The object of the invention is a twist drill bit for drilling composite materials, particularly through-hole drilling, according to the preamble of claim 1. Such a twist drill bit is known from US 2003/202853 A1. Having analyzed the modern construction solutions in aviation, automobile industry or sports equipment, one can observe the indisputable dynamic growth of application of composite materials, as well as their combinations with metals in the form of sandwich materials. It results from very good properties of this type of materials, such as high strength, stiffness and corrosion resistance. The above mentioned facts can be approved by the publication "Podstawy mechaniki kompozytów" (Fundamentals of composite mechanics) by J. German, published by Wydawnictwo Politechniki Krakowskiej, Kraków 1996. However, their heterogeneous structure, anisotropy and reinforcement with materials of high abrasive properties makes their machining considerably difficult. Generally used so far machining operations to form metal shapes, such as turning, drilling or milling are also widely used to machine composite materials on account of machine equipment and experienced workers available. As it has been mentioned before, materials used as reinforcement in composite materials, particularly glass, graphite, boron, corundum, silicon or calcium carbide result in fast wear of the tools used for machining, as the materials are equally hard, or even harder than the tool materials themselves.

Due to an unlimited range of combination of composite components (their volume and type), as well as their geometrical arrangement, what in turn affects their machining and combination with other materials (with metals, among others) abilities, machining processing poses a real challenge to the modern tool constructors. Among machining processing operations performed on composite material structures, especially large-size ones, drilling, particularly through holes that can be used for assembly purposes, is the most important one. The most widely used method of drilling is the one with the use of twist drill bits. In order to reduce the impact of a tool in the process of drilling composite materials, it is advisable to use a little chisel edge drill. The phenomenon that creates most problems in the process of drilling composite materials is delamination resulting from drill load that exceeds the interlaminar force value. Other negative phenomena involved in machining of composite materials are burns of matrix material, achieving appropriate surface finish, achieving correct geometry and dimensions of performed holes, pulling out reinforcement fibers or material peeling.

In order to diminish the negative effect of composite material properties on the quality of hole making operations, some support in the drilling zone or suitably modified tools, such as saw drills or trepanning drills are used. Another method is drilling in two steps - the initial followed by the finish one. The issues are widely discussed in the work by C.C. Tsao, H. Hocheng in their publication entitled 'Effect of exit back-up on delamination in drilling composite materials using a saw drill and core drill', International Journal of Machine Tools & Manufacture, 45 (2005), 1261-1270 and C.C. Tsao, H. Hocheng, 'The effect of chisel length and associated pilot hole on delamination when drilling composite materials', 'International Journal of Machine Tools & Manufacture 43 (11) (2003) 1087-1092. In numerous cases, especially while drilling large-size components which often occur in aviation industry or sports equipment manufacturing, it is impossible to use any support in the drilling zone, or in case of hand drilling it is not always possible to divide the process into two stages - drilling and finishing.

It appeared possible to improve composite material drilling conditions by designing a new drill bit, thus overcoming the previously mentioned problems.

The twist drill bit for drilling composite materials, particularly through-hole drilling, according to the invention, comprises the features that the blade formed at the upper part of the drill bit has two steps - the initial and the finish one, wherein the length of the cylindrical part of the initial step is at least 0.5 mm, and its first diameter is shorter than the second diameter of the finish step by 0.5 - 2 mm, whereas the point angles of the initial step and finish step range from 60° to 90°.

Forming the geometry of the cutting part of the drill, according to the invention, for composite material drilling allowed the user to eliminate totally a very serious defect, namely delamination in the exit zone of a tool that is often observed in aviation industry. The improvement has been achieved by dividing the machined material into two parts. The first one is removed in the initial stage where 70% of the material is removed, thus reducing the axial force resulting from a little point angle of the stage. The other part involves retaining a slight layer, less than 1 mm, of the material placed circumferentially around the hole axis, where the finish step is also characterized by a little point angle. A small amount of the material results in higher stiffness compared with conventional drilling. Applying a little point angle, not exceeding 90°, for this part of the edge results in considerable distribution of machining force in the radial direction, thus reducing axial components which are the main factor causing delamination. Forming the finish step at the upper part of the drill bit enables the removal of even the slightest trace of the material that has been deformed by the initial step of the drill bit.

Moreover, due to the particular construction of the cutting edge of the drill, a considerable improvement of smoothness of a performed hole, as well as dimensional and shape accuracy has been achieved.

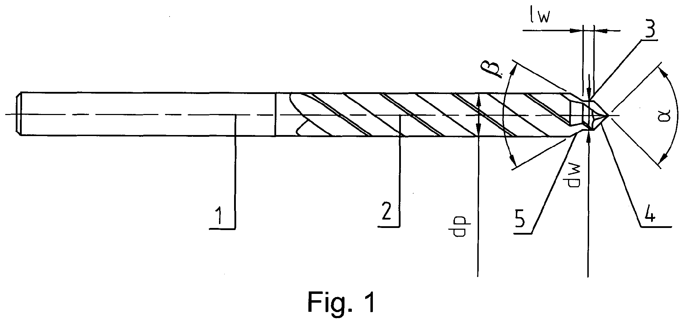

The object of the invention is presented as an exemplary embodiment in fig. 1, wherein the geometry of the drill bit for drilling composite materials is shown schematically.

The twist drill bit according to the invention is composed of the cylindrical shank 1 used for mounting the drill in a drilling machine, and the working part 2 having a spiral part topped with the upper part with the blade 3. The blade 3 of the working part 2, looking from the top of the drill bit, makes up two steps 4 and 5, that is, the initial step 4 with the angular and cylindrical parts, and the finish step 5 with the angular part topped with the spiral part of the working part of the drill bit. The first diameter d_{w} of the cylindrical part of the initial step 4 is shorter than the second diameter dp of the spiral part of the finish step 5 by 1 mm. Then the first point angle α of the angular part of the initial step 4 is 90°, and for the angular part of the finish step 5 the second point angle β is 60°. An essential element of the geometry of the blade 3 of the twist drill bit is the length l_{w} of the cylindrical part of the initial step 4, which is 1 mm long for the exemplary embodiment.

## Claims

1. A twist drill bit for drilling composite materials, particularly through-hole drilling, wherein the blade (3) formed at the upper part of the drill bit has two steps - the initial (4) and the finish one (5), wherein the length (l_{w}) of the cylindrical part of the initial step (4) is at least 0.5 mm, and its first diameter (d_{w}) is shorter than the second diameter (dp) of the finish step (5) by 0.5 - 2 mm,
**characterised in that** the point angles (α and P) of the initial step (4) and the finish step (5) range from 60° to 90°.

## Patentansprüche

1. Wendelbohrer zum Bohren von Kompositwerkstoffen, insbesondere Durchgangsbohrung, in dem die Schneide (3) im oberen Teil des Bohrers aus zwei Stufen besteht - Anfangsstufe (4) und Endstufe (5), wo die Länge (lw) des zylindrischen Teils der Anfangsstufe (4) mindestens 0.5 mm beträgt, und ihr erster Durchmesser (dw) kürzer als der zweite Durchmesser (dp) der Endstufe (5) um 0.5 - 2 mm ist, **dadurch gekennzeichnet, dass** die Spitzenwinkeln (α und β) von Anfangsstufe (4) und Endstufe (5) im Bereich zwischen 60° bis 90° liegen.

## Revendications

1. Le foret hélicoïdal pour forer les matériaux composites, particulièrement des trous de passage, où la pointe (3) formée dans la partie de tête du foret possède deux étages - préalable (4) et de reperçage (5), où la longueur /lw/ de la partie cylindrique de l'étage préalable (4) est d'au moins 0,5 mm et son premier diamètre (dw) est inférieur au deuxième diamètre (dp) de l'étage de reperçage (5) de 0,5 à 2 mm, **caractérisé par le fait que** les angles (α et β) de l'étage préalable (4) et de l'étage de reperçage (5) sont de 60 à 90°.
